(19) Europäisches Patentamt
European Patent Office
Office européen des brevets

(11) EP 2 980 895 B1

(12) **EUROPEAN PATENT SPECIFICATION**

(45) Date of publication and mention of the grant of the patent:
**20.11.2019 Bulletin 2019/47**

(21) Application number: **15157960.4**

(22) Date of filing: **06.03.2015**

(51) Int Cl.:
*H01M 2/02* *(2006.01)*        *H01M 4/131* *(2010.01)*
*H01M 4/36* *(2006.01)*        *H01M 4/485* *(2010.01)*
*H01M 4/525* *(2010.01)*       *H01M 4/505* *(2010.01)*
*H01M 10/0525* *(2010.01)*     *H01M 4/02* *(2006.01)*
*H01M 10/42* *(2006.01)*

(54) **NONAQUEOUS ELECTROLYTE BATTERY AND BATTERY PACK**

NICHTWÄSSRIGE ELEKTROLYTBATTERIE UND BATTERIEPACK

ÉLECTRODE, BATTERIE À ÉLECTROLYTE NON AQUEUSE ET BLOC-BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2014 JP 2014156550**
**26.02.2015 JP 2015037031**

(43) Date of publication of application:
**03.02.2016 Bulletin 2016/05**

(73) Proprietor: **Kabushiki Kaisha Toshiba**
**Tokyo 105-8001 (JP)**

(72) Inventors:
• **Kuriyama, Hiromichi**
  **Tokyo, 105-8001 (JP)**
• **Saruwatari, Hidesato**
  **Tokyo, 105-8001 (JP)**
• **Kano, Tetsuro**
  **Tokyo, 105-8001 (JP)**
• **Watanabe, Yuki**
  **Tokyo, 105-8001 (JP)**
• **Takami, Norio**
  **Tokyo, 105-8001 (JP)**

(74) Representative: **Hoffmann Eitle**
**Patent- und Rechtsanwälte PartmbB**
**Arabellastraße 30**
**81925 München (DE)**

(56) References cited:
EP-A1- 1 295 851        EP-A1- 1 655 793
EP-A1- 1 667 260        EP-A2- 1 530 248
JP-A- H1 027 626        JP-A- 2006 004 811
JP-A- 2008 270 086      US-A1- 2005 221 170
US-A1- 2006 105 241     US-A1- 2009 123 839
US-A1- 2011 256 437

• OHZUKU T ET AL: "LAYERED LITHIUM INSERTION MATERIAL OF LICO1/3NI1/3MN1/3O2 FOR LITHIUM-ION BATTERIES", CHEMISTRY LETTERS, CHEMICAL SOCIETY OF JAPAN, JAPAN, 1 July 2001 (2001-07-01), page 642/643, XP009015329, ISSN: 0366-7022, DOI: 10.1246/CL.2001.642
• OHZUKU T ET AL: "Zero-Strain Insertion Material of Li[Li1/3/Ti5/3]o4 for Rechargeable Lithium Cells", JOURNAL OF THE ELECTROCHEMICAL SOCIETY, ELECTROCHEMICAL SOCIETY, vol. 142, no. 5, 1 May 1995 (1995-05-01), pages 1431-1435, XP002401881, ISSN: 0013-4651, DOI: 10.1149/1.2048592

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

Embodiments described herein relate generally to a nonaqueous electrolyte battery and a battery pack.

BACKGROUND

Attempts have been made to reduce an average operation potential of a nonaqueous electrolyte battery, by setting a positive electrode capacity to be more excessive than a negative electrode capacity.

US 2005221170 A1 discloses a non-aqueous electrolyte secondary battery including a positive electrode, a negative electrode, and a non-aqueous electrolyte, wherein the negative electrode contains a conductive agent and a negative electrode active material including a lithium titanium oxide. The conductive agent in the negative electrode includes graphitized vapor grown carbon fiber having a lattice constant $C_0$ along a stacking direction of from 6.7 Å to 6.8 Å, as determined by X-ray diffraction. In one embodiment, the positive electrode active material is $LiMn_{1/3}Ni_{1/3}Co_{1/3}O_2$, and the mass ratio of the negative electrode active material to the positive electrode active material is from 0.70 to 0.95.

US 2011256437 A1 discloses a lithium secondary battery positive electrode comprising a positive electrode material mixture layer containing a positive electrode active material, a conductivity enhancing agent and a binder on one or both sides of a current collector, wherein the positive electrode active material contains a lithium-containing composite oxide represented by the general compositional formula: $Li_{1+x}MO_2$, where x is in a range of $-0.155 \leq x \leq 0.15$ and M represents an element group of three or more elements including at least Ni, Co and Mn. The binder contains a tetrafluoroethylene-vinylidene fluoride copolymer (P(TFE-VDF)) and polyvinylidene fluoride (PVDF). The total content of the binder in the positive electrode material mixture layer is 1 to 4 mass %, and the ratio of the P(TFE-VDF) is 10 mass % or more, when the total of the P(TFE-VDF) and the PVDF is taken as 100 mass %. Examples of the negative electrode active material include graphite, pyrolytic carbon, coke, glassy carbon, baked products of organic polymer compounds, mesocarbon microbeads, carbon fiber, and activated carbon.

JP 2008-270086 relates to non-aqueous electrolyte secondary battery which realizes high capacity by high voltage charging and further has excellent cycle characteristics and storage characteristics. The positive electrode of the nonaqueous electrolyte secondary battery contains a first positive electrode active material (LiMnNiCoMO) and / or a second positive electrode active material (LiMgCoAlM'O), and on the surface of the positive electrode, A compound having a bond represented by $-SO_n-$, wherein the content of sulfur on the surface of the positive electrode is 0.2 atomic percent or more and 1.5 atomic percent or less when analyzed by X-ray photoelectron spectroscopy.

BRIEF DESCRIPTION OF THE DRAWINGS

FIG. 1 is a partially cutout perspective view of a nonaqueous electrolyte battery of a first example according to a first embodiment;
FIG. 2 is an enlarged sectional view of part A in FIG. 1;
FIG. 3 is a partially cutout perspective view of a nonaqueous electrolyte battery of a second example according to the first embodiment;
FIG. 4 shows a part of a photoelectron spectrum of a surface of a positive electrode included in a nonaqueous electrolyte battery of an example according to the first embodiment;
FIG. 5 shows another part of the photoelectron spectrum of the surface of the positive electrode included in the nonaqueous electrolyte battery of the example according to the first embodiment;
FIG. 6 is an exploded perspective view of a battery pack of an example according to a second embodiment; and
FIG. 7 is a block diagram showing an electric circuit of the battery pack shown in FIG. 6.

DETAILED DESCRIPTION

According to a first embodiment, there is provided a nonaqueous electrolyte battery. The nonaqueous electrolyte battery includes a negative electrode, a positive electrode, and a nonaqueous electrolyte. The negative electrode includes an oxide of titanium. The positive electrode includes a nickel-cobalt-manganese composite oxide. The nickel-cobalt-manganese composite oxide is represented by a composition formula $Li_{1-a}Ni_xCo_yMn_zO_2$. Herein, subscripts x, y, and z satisfy an inequality $0.1 \leq x/(y + z) \leq 1.3$, and subscript a satisfies $0 \leq a \leq 1$. A ratio $A_S/A_{Ni}$ of an S atom abundance ratio $A_S$ to an Ni atom abundance ratio $A_{Ni}$ obtained by subjecting a surface of the positive electrode to a photoelectron spectroscopic measurement is 0.4 to 5. A ratio p/n of a capacity p of the positive electrode to a capacity n of the negative electrode is within a range of 1.2 to 2.

According to a second embodiment, there is provided a battery pack. The battery pack includes a nonaqueous electrolyte battery according to the first embodiment.

The embodiments will be explained below with reference to the drawings. In this case, the structures common to all embodiments are represented by the same symbols and duplicated explanations will be omitted. Also, each drawing is a typical view for explaining the embodiments and for promoting the understanding of the embodiments. Though there are parts different from an actual device in shape, dimension and ratio, these structural designs may be properly changed taking the following explanations and known technologies into consideration.

(First Embodiment)

According to a first embodiment, a nonaqueous electrolyte battery is provided. The nonaqueous electrolyte battery includes a negative electrode, a positive electrode, and a nonaqueous electrolyte. The negative electrode includes an oxide of titanium. The positive electrode includes a nickel-cobalt-manganese composite oxide. The nickel-cobalt-manganese composite oxide is represented by a composition formula $Li_{1-a}Ni_xCo_yMn_zO_2$. Herein, subscripts x, y, and z satisfy an inequality $0.1 \leq x/(y + z) \leq 1.3$, and subscript a satisfies $0 \leq a \leq 1$. A ratio $A_S/A_{Ni}$ of an S atom abundance ratio $A_S$ to an Ni atom abundance ratio $A_{Ni}$ obtained by subjecting a surface of the positive electrode to a photoelectron spectroscopic measurement is 0.4 to 5. A ratio p/n of a capacity p of the positive electrode to a capacity n of the negative electrode is within a range of 1.2 to 2.

In a nonaqueous electrolyte battery in which the ratio (p/n) of the positive electrode capacity to the negative electrode capacity is much greater than 1, charge and discharge cycles may be repeated in a state where a desorption amount of Li from the positive electrode is low. In such a case, there is a problem that the input and output characteristics of the battery after the charge and discharge cycles are decreased as compared with a nonaqueous electrolyte battery having a p/n ratio of about 1. As a result of an extensive research of the cause, the present inventors found that reductive decomposition of a positive electrode active material is caused by an over-discharge state in which the positive electrode active material includes excess Li, or an over-potential during discharge, and the reductive composition leads to the structural deterioration of the positive electrode active material. The structural deterioration was found to cause the electrical resistance of the positive electrode to increase.

Since the nonaqueous electrolyte battery according to the first embodiment has the above configuration, the battery can suppress the structural deterioration of the positive electrode active material to thereby exhibit excellent cycle life. Further, due to the above configuration, an average operating voltage of the nonaqueous electrolyte battery according to the first embodiment can be reduced. The reasons thereof will be described in detail later.

First, the nickel-cobalt-manganese composite oxide included in the positive electrode and represented by the composition formula $Li_{1-a}Ni_xCo_yMn_zO_2$ ($0.1 \leq x/(y + z) \leq 1.3$, $0 \leq a \leq 1$) can suppress the increase in the valence of Ni. The average operating voltage of the nonaqueous electrolyte battery can be reduced by using the positive electrode including the composite oxide and the negative electrode including the oxide of titanium in combination, and at the same time setting the capacity ratio p/n of the positive electrode capacity p to the negative electrode capacity n to 1.2 to 2.

When x/(y + z) is smaller than 0.1 in the nickel-cobalt-manganese composite oxide represented by the composition formula $Li_{1-a}Ni_xCo_yMn_zO_2$, during charge and discharge, mainly the valence of Co changes. Therefore, in this case, a potential of a positive electrode increases, which causes the increase in the operating voltage of the battery. On the other hand, when x/(y + z) is greater than 1.3 in the nickel-cobalt-manganese composite oxide represented by the composition formula $Li_{1-a}NiCo_yMn_zO_2$, the valence of Ni is increased. Therefore, in this case, too, the potential of the positive electrode increases, which causes the increase in the operating voltage of the battery.

It is preferable that x/(y + z) is 0.3 to 1.3, and y and z satisfy $y \geq z$. When x/(y + z) is 0.3 or greater, the potential of the positive electrode can be maintained at a lower level. When y and z satisfy $y \geq z$, there is obtained an effect of promoting the formation of a later described surface state, where a ratio of an S atom abundance ratio $A_S$ to an Ni atom abundance ratio $A_{Ni}$ is within a range of 0.4 to 5.

It is preferable that x/(y + z) is 0.6 to 1.0, and y and z satisfy $y \geq z$. When x/(y + z) is 0.6 to 1.0, the potential of the positive electrode can especially be maintained at a lower level. When y and z satisfy $y \geq z$, there is obtained an effect of further promoting the formation of a later described surface state, where a ratio of an S atom abundance ratio $A_S$ to an Ni atom abundance ratio $A_{Ni}$ is within a range of 0.4 to 5.

A subscript a in the composition formula $Li_{1-a}Ni_xCo_yMn_zO_2$ of the nickel-cobalt-manganese composite oxide included in the positive electrode represents a desorption amount of Li per 1 mol of the nickel-cobalt-manganese composite oxide.

In the nonaqueous electrolyte battery according to the first embodiment, the ratio p/n of the capacity p of the positive electrode to the capacity n of the negative electrode is within a range of 1.2 to 2. As such, it should be noted that in the nonaqueous electrolyte battery according to the first embodiment, the capacity of the positive electrode is greater than the capacity of the negative electrode. In the nonaqueous electrolyte battery having such a ratio p/n, the charge and discharge cycle is likely to be repeated in a state where the desorption amount of Li in the positive electrode is low.

However, the nickel-cobalt-manganese composite oxide represented by the composition formula $Li_{1-a}Ni_xCo_yMn_zO_2$ ($0.1 \leq x/(y + z) \leq 1.3$, $0 \leq a \leq 1$) is less likely to get into an over-discharge state.

Furthermore, the positive electrode having the surface state, where the ratio $A_S/A_{Ni}$ of the S atom abundance ratio $A_S$ to the Ni atom abundance ratio $A_{Ni}$ obtained by photoelectron spectroscopy is 0.4 to 5, can have a surface on which a protective coating is formed. The protective coating can prevent the absorption of excess Li by the nickel-cobalt-manganese-composite oxide. That is, in such a positive electrode, the nickel-cobalt-manganese composite oxide, which is the positive electrode active material, can be prevented from being in an over-discharge state.

On the other hand, when the ratio $A_S/A_{Ni}$ is less than 0.4, the nickel-cobalt-manganese composite oxide cannot be sufficiently prevented from getting into an over-discharge state. On the other hand, when the ratio $A_S/A_{Ni}$ is greater than 5, the electrical resistance of the positive electrode becomes too high, leading to a decrease in the input and output characteristics of the nonaqueous electrolyte battery.

The ratio $A_S/A_{Ni}$ of the positive electrode surface is preferably 0.5 to 2.

The ratio $A_S/A_{Ni}$ on the positive electrode surface may depend on the generation of a compound including $SO_x$ (x may be a value being within a range of 1.0 to 4) on the surface of the positive electrode active material.

The nonaqueous electrolyte battery including the positive electrode having such a surface state can be manufactured by comprehensively combining factors such as selection of materials, manufacturing conditions, and conditions of processes such as initial charging and aging. For example, the nonaqueous electrolyte battery according to the first embodiment can be manufactured according to procedures described in each of the following examples.

The capacity ratio p/n of the positive electrode capacity p to the negative electrode capacity n is set to 1.2 to 2. Thereby, the increase in the potential of the positive electrode can be suppressed, and the generation of heat from the positive electrode can be suppressed. On the other hand, when the ratio p/n is less than 1.2, the increase in the potential of the positive electrode during over-charge cannot be sufficiently suppressed, which is apt to cause sudden generation of heat associated with oxygen release from the positive electrode and an oxidative decomposition reaction of an electrolyte solution. When the ratio p/n is greater than 2.0, a positive electrode mixture layer has an increased thickness since an excessive amount of the positive electrode active material is supported on a current collecting foil. The electrical resistance of the positive electrode is increased due to the increased thickness of the positive electrode mixture layer. For this reason, the potential of the positive electrode is apt to be increased by the electrical resistance, thereby causing the oxidative decomposition reaction of the electrolyte solution, and decreasing safety as a result of the generation of heat.

The nonaqueous electrolyte battery according to the first embodiment can achieve both an effect of reducing the average operating voltage and an effect of suppressing the decrease in the input and output characteristics caused by the increase in electrical resistance of the positive electrode after charge and discharge cycles. As a result, the nonaqueous electrolyte battery according to the first embodiment can exhibit a low average operating voltage and at the same time exhibit excellent cycle characteristics.

Next, a nonaqueous electrolyte battery according to a first embodiment will be described in more detail.

The nonaqueous electrolyte battery according to the first embodiment includes a negative electrode, a positive electrode, and a nonaqueous electrolyte.

The negative electrode may include a negative electrode current collector and a negative electrode mixture layer formed on the negative electrode current collector.

The negative electrode current collector may include on a surface, a portion that does not support the negative electrode mixture layer. The portion can function as a negative electrode tab. Alternatively, the negative electrode may also further include a negative electrode tab independent from the negative electrode current collector.

As a negative electrode active material, an oxide of titanium may be included in the negative electrode mixture layer. The negative electrode mixture layer may further include a conductive agent and a binder if needed.

The positive electrode may include a positive electrode current collector and a positive electrode mixture layer formed on the positive electrode current collector. The positive electrode current collector may include on a surface, a portion that does not support the positive electrode mixture layer. The portion can function as a positive electrode tab. Alternatively, the positive electrode may also further include a positive electrode tab independent from the positive electrode current collector.

As a positive electrode active material, the positive electrode mixture layer may include a nickel-cobalt-manganese composite oxide. The positive electrode mixture layer may further include a conductive agent and a binder, if needed.

The positive electrode and the negative electrode can constitute an electrode group. In the electrode group, the positive electrode mixture layer and the negative electrode mixture layer may be opposed to each other interposing, for example, a separator. The electrode group can have various structures. For example, the electrode group may have a stacked structure. The electrode group having the stacked structure can be obtained by stacking, for example, a plurality of positive electrodes and negative electrodes with the separator sandwiched between the positive electrode mixture layer and the negative electrode mixture layer. Alternatively, the electrode group may have a wound structure. The wound electrode group can be obtained, for example, by laminating a separator, a positive electrode, another separator, and a negative electrode in this order to produce a laminate, and winding the laminate so that the negative electrode is positioned outside.

The nonaqueous electrolyte battery may further include a negative electrode terminal and a positive electrode terminal. The negative electrode terminal can function as a conductor for electron transfer between the negative electrode and an external terminal by electrically connecting a part of the negative electrode terminal to a part of the negative electrode. The negative electrode terminal may be connected to, for example, the negative electrode current collector, particularly the negative electrode tab. Similarly, the positive electrode terminal may function as a conductor for electron transfer between the positive electrode and an external circuit by electrically connecting a part of the positive electrode terminal to a part of the positive electrode. The positive electrode terminal may be connected to, for example, the positive electrode current collector, particularly the positive electrode tab.

The nonaqueous electrolyte battery according to the first embodiment may further include a container. The container can house the electrode group and the nonaqueous electrolyte. The electrode group may be impregnated with the nonaqueous electrolyte in the container. A part of the positive electrode terminal and a part of the negative electrode terminal may extend out from the container.

Hereinafter, the negative electrode, the positive electrode, the nonaqueous electrolyte, the separator, the positive electrode terminal, the negative electrode terminal, and the container will be described in more detail.

(1) Negative Electrode

A sheet including a material having high electrical conductivity may be used as the negative electrode current collector. For example, an aluminum foil or an aluminum alloy foil may be used as the negative electrode current collector. When the aluminum foil or the aluminum alloy foil is used, the thickness is, for example, 20 $\mu$m or less, and preferably 15 $\mu$m or less. The aluminum alloy foil may include one or more of magnesium, zinc, silicon, or the like. The amount of transition metals such as iron, copper, nickel, and chromium included in the aluminum alloy foil is preferably 1% or less.

The oxide of titanium included in the negative electrode is preferably at least one selected from the group consisting of a lithium-titanium composite oxide having a spinel type structure ($Li_{4+x}Ti_5O_{12}$ (a subscript x varies between 0 and 3 according to a state of charge)), lithium titanate having a ramsdellite type structure ($Li_{2+x}Ti_3O_7$ (a subscript x varies between 0 and 2 according to a state of charge)), monoclinic titanium dioxide ($Li_xTiO_2$ (B) (a subscript x varies between 0 and 1 according to a state of charge)), and a monoclinic niobium-titanium composite oxide (for example, $Li_xNb_2TiO_7$ (a subscript x varies between 0 and 4 according to a state of charge)). More preferably, the oxide of titanium is the lithium-titanium composite oxide having a spinel type structure.

A negative electrode mixture layer may include negative electrode active material particles including an oxide of titanium. The negative electrode active material particles preferably have an average primary particle size of 5 $\mu$m or less. When the average primary particle size is 5 $\mu$m or less, an effective area contributing to an electrode reaction can be sufficiently secured. Therefore, good discharge characteristics with a large current can be obtained.

The negative electrode active material particles preferably have a specific surface area of 1 to 10 m$^2$/g. When the specific surface area is 1 m$^2$/g or greater, an effective area contributing to an electrode reaction is sufficient. Therefore, good discharge characteristics with a large current can be obtained. On the other hand, when the specific surface area is 10 m$^2$/g or less, a reaction between the negative electrode active material particles and a non-aqueous electrolyte is suppressed. Therefore, decrease of a charge and discharge efficiency and gas generation during storage can be suppressed.

A negative electrode conductive agent is used, if needed, in order to improve current-collecting performance. Examples of the negative electrode conductive agent include carbon materials. The carbon materials preferably have high adsorption performance of alkali metals and high conductivity. Examples of the carbon materials include carbon black, acetylene black being a typical example, and graphite.

A negative electrode binder is used in order to bind the negative electrode active material particles and the negative electrode current collector. Examples of the negative electrode binder include polytetrafluoroethylene (PTFE), polyvinylidene fluoride (PVdF), fluororubber, styrene-butadiene rubber (SBR), polypropylene (PP), polyethylene (PE), and carboxymethyl cellulose (CMC).

The proportions of the negative electrode active material, the negative electrode conductive agent, and the negative electrode binder included in the negative electrode mixture layer are preferably 70 to 95% by weight, 0 to 25% by weight, and 2 to 10% by weight, respectively.

The negative electrode can be produced, for example, according to the following procedure. First, a negative electrode active material, a conductive agent, and a binder are mixed into an appropriate solvent, for example, N-methyl-2-pyrrolidone (NMP), to prepare a slurry. The slurry is applied onto the surface of the negative electrode current collector to form an applied coat, and the applied coat is dried. The negative electrode mixture layer having a desired density is produced by pressing the dried applied coat, and thereby the negative electrode is completed.

(2) Positive Electrode

A sheet including a material having high electrical conductivity may be used as a positive electrode current collector. For example, an aluminum foil or an aluminum alloy foil may be used as the positive electrode current collector. When the aluminum foil or the aluminum alloy foil is used, the thickness is, for example, 20 $\mu$m or less, and preferably 15 $\mu$m or less. The aluminum alloy foil may include one or more of magnesium, zinc, silicon, or the like. The amount of transition metals such as iron, copper, nickel, and chromium included in the aluminum alloy foil is preferably 1% or less.

A positive electrode active material may also include an active material other than the nickel-cobalt-manganese composite oxide represented by a composition formula $Li_{1-a}Ni_xCO_yMn_zO_2$. Examples of the positive electrode active material include a lithium-manganese composite oxide (for example, $LiMn_2O_4$ or $LiMnO_2$), a lithium-nickel composite oxide (for example, $LiNiO_2$), a lithium-cobalt composite oxide ($LiCoO_2$), a lithium-nickel-cobalt composite oxide (for example, $LiNi_{1-x}Co_xO_2$, $0 < x \leq 1$), a lithium-manganese-cobalt composite oxide (for example, $LiMnCo_{1-x}O_2$, $0 < x \leq 1$), lithium iron phosphate ($LiFePO_4$), and a lithium-composite phosphate compound (for example, $LiMn_xFe_{1-x}PO_4$, $0 < x \leq 1$).

A positive electrode conductive agent is used, if needed, in order to improve current-collecting performance. Examples of the positive electrode conductive agent include carbon black, acetylene black being a typical example, and graphite.

A positive electrode binder is used in order to bind the positive electrode active material and the positive electrode current collector. Examples of the positive electrode binder include polytetrafluoroethylene (PTFE), polyvinylidene fluoride (PVdF), fluororubber, styrene-butadiene rubber (SBR), polypropylene (PP), polyethylene (PE), and carboxymethyl cellulose (CMC).

The proportions of the positive electrode active material, the positive electrode conductive agent, and the positive electrode binder included in a positive electrode mixture layer are preferably 80 to 95% by weight, 3 to 20% by weight, and 2 to 7% by weight, respectively.

The positive electrode can be produced, for example, according to the following procedure. First, a positive electrode active material, a conductive agent, and a binder are mixed into an appropriate solvent, for example, N-methyl-2-pyrrolidone (NMP), to prepare a slurry. The slurry is applied onto the surface of the positive electrode current collector to form an applied coat, and the applied coat film is dried. The positive electrode mixture layer having a desired density is produced by pressing the dried applied coat, and thereby the positive electrode is completed.

The positive electrode having a surface state, where the ratio $A_S/A_{Ni}$ of the S atom abundance ratio $A_S$ to the Ni atom abundance ratio $A_{Ni}$ is 0.4 to 5, can be formed, for example, by including a suitable additive in a nonaqueous electrolyte and performing a suitable charge and discharge process and aging treatment during a manufacture of a nonaqueous electrolyte battery, as described later.

(3) Separator

The separator is made of an insulating material, and can prevent the electrical contact of the positive electrode with the negative electrode. Preferably, the separator is made of a material that allows the nonaqueous electrolyte to pass through, or has a shape that allows the nonaqueous electrolyte to pass through. Examples of the separator include a non-woven fabric made of a synthetic resin, a porous polyethylene film, a porous polypropylene film, and a cellulose based separator.

(4) Nonaqueous Electrolyte

The nonaqueous electrolyte may include, for example, a nonaqueous solvent, and an electrolyte and an additive which are dissolved in the nonaqueous solvent.

Any known nonaqueous solvent used in nonaqueous electrolyte batteries may be used as the nonaqueous solvent. First examples of nonaqueous solvent include cyclic carbonates such as ethylene carbonate (EC) and propylene carbonate (PC). Second examples of nonaqueous solvent include linear carbonates such as dimethyl carbonate, methyl ethyl carbonate, and diethyl carbonate; $\gamma$-butyrolactone; acetonitrile; methyl propionate; ethyl propionate; cyclic ethers such as tetrahydrofuran and 2-methyl tetrahydrofuran; and linear ethers such as dimethoxyethane and diethoxyethane. The second examples of solvent generally have viscosity lower than that of the first examples of solvent. The nonaqueous solvent may be a solvent obtained by mixing the first example of solvent with the second example of solvent.

The electrolyte is, for example, an alkali salt, and preferably a lithium salt. The electrolyte preferably includes at least one kind of lithium salt in which a van der Waals ion radius of an anion is 0.25 nm to 0.4 nm. Examples of the lithium salt include lithium hexafluorophosphate ($LiPF_6$), lithium hexafluoroarsenate ($LiA_sF_6$), and lithium trifluorometh-

anesulfonate (LiCF$_3$SO$_3$). Preferably, the electrolyte is lithium hexafluorophosphate (LiPF$_6$). The concentration of the electrolyte in the nonaqueous electrolyte is preferably 0.5 to 2 mol/L.

The additive may be selected from a group capable of forming the surface state, where the atom abundance ratios of sulfur and nickel are within the ranges described above. The surface state of the positive electrode in the nonaqueous electrolyte battery according to the first embodiment may be achieved, for example, by including the additive in the nonaqueous electrolyte, and performing a specific manufacturing maneuver as described in the following examples. The additive may include, in a molecular structure, at least one functional group that may be selected from the group consisting of a sulfonyl group (R$^1$-S(=O)$_2$-R$^2$), a sulfone amide group (R$^1$-SO$_2$-NR$^2$R$^3$), a sultone group (R$^1$-S(=O)$_2$-OR$^2$), a sulfate ester group (R$^1$O-SO$_2$-OR$^2$), and a sulfite ester group (R$^1$O-SO-OR$^2$). Examples of the additive include dimethyl sulfone (DMS), ethyl methyl sulfone (EMS), diphenylsulfone (DPS), and sulfolane (SL) as a compound having a sulfonyl group; lithium bis(trifluoromethanesulfonyl)imide (LiTFSI), lithium bis(pentafluoroethanesulfonyl)imide (LiBETI), and lithium trifluoromethanesulfonate (LiTFS) as a compound having a sulfone amide group; 1,2-ethanesultone (1,2-ES), 1,3-propanesultone (1,3-PS), 1,4-butanesultone (1,4-BS), 1,5-pentanesultone (1,5-PS), 1,3-propenesultone (1,3-PRS), and 1,4-butenesultone (1,4-BRS) as a compound having a sultone group; dimethyl sulfate (DMSFA) as a compound having a sulfate ester group; and dimethyl sulfide (DMSF), dipropyl sulfide (DPSF), and ethylene sulfide (ESF) as a compound having a sulfite ester group. The concentration of the additive agent is preferably 0.5% by mass to 3.0% by mass.

(5) Negative Electrode Terminal and Positive Electrode Terminal

The negative electrode terminal and the positive electrode terminal are preferably made of a material having high electrical conductivity. These terminals are preferably made of the same material as that of the current collector in order to reduce contact resistance when the terminals are connected to the current collector.

(6) Container

As the container, for example, a metal container or a laminate film container may be used. However, the container is not particularly limited.

A nonaqueous electrolyte battery having excellent impact resistance and long-term reliability can be achieved by using the metal container as the container. The use of the laminate film container as the container can achieve a nonaqueous electrolyte battery having excellent corrosion resistance, and at the same time, the weight of the nonaqueous electrolyte battery can be reduced.

A metal container having a thickness within a range of, for example, 0.2 to 5 mm may be used. The metal container more preferably has a thickness of 0.5 mm or less.

The metal container preferably includes at least one metal selected from the group consisting of Fe, Ni, Cu, Sn, and Al. The metal container may be made of, for example, aluminum, an aluminum alloy, or the like. The aluminum alloy is preferably an alloy including elements such as magnesium, zinc, and silicon. When the alloy includes transition metals such as iron, copper, nickel, and chromium, the amount of these transition metals is preferably 1% by weight or less. Thereby, the long-term reliability and the impact resistance under a high temperature environment can be dramatically improved.

A laminate film container having a thickness being within a range of, for example, 0.1 to 2 mm may be used. The thickness of the laminate film is more preferably 0.2 mm or less.

As the laminate film, a multilayer film including a metal layer and resin layers sandwiching the metal layer is used. The metal layer preferably includes at least one metal selected from the group consisting of Fe, Ni, Cu, Sn, and Al. The metal layer is preferably made of an aluminum foil or an aluminum alloy foil in order to obtain a lightweight battery. As the resin layer, a high-molecular material such as polypropylene (PP), polyethylene (PE), nylon, or polyethylene terephthalate (PET) may be used. The laminate film can be molded into the shape of the container by thermally sealing the laminate film.

Examples of the form of the container include a flat form (thin form), a rectangular form, a cylinder form, a coin form, and a button form. The container can have various sizes according to applications. For example, when the non-aqueous electrolyte battery according to the first embodiment is used in the application of a mobile electronic device, the container can be miniaturized according to the size of an electronic device to be mounted. Alternatively, a container for a nonaqueous electrolyte battery to be mounted on two-wheel or four-wheel vehicles or the like may be a container for a large-sized battery.

Next, an example of a nonaqueous electrolyte battery according to an embodiment will be described in more detail with reference to the drawings.

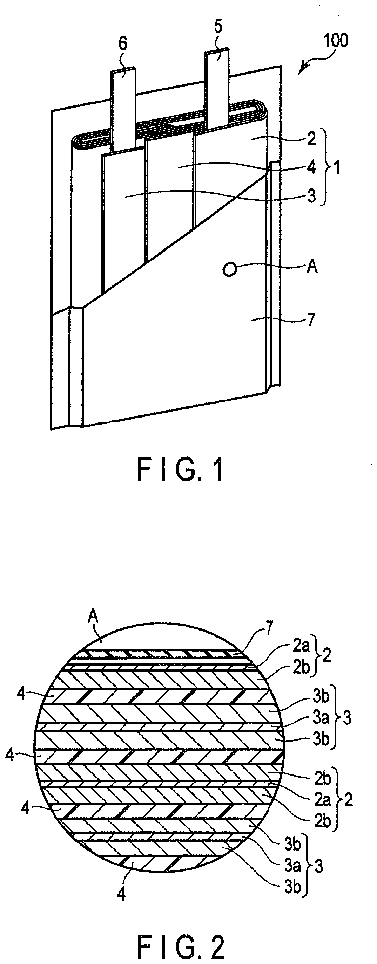

FIG. 1 is a partially cutout perspective view of a nonaqueous electrolyte battery of a first example according to the embodiment. FIG. 2 is an enlarged sectional view of part A of the nonaqueous electrolyte battery shown in FIG. 1.

A nonaqueous electrolyte battery 100 shown in FIGS. 1 and 2 includes a flat electrode group 1.

The flat electrode group 1 includes a negative electrode 2, a positive electrode 3, and a separator 4.

The negative electrode 2 includes a negative electrode current collector 2a and a negative electrode mixture layer 2b supported on the negative electrode current collector 2a, as shown in FIG. 2. The positive electrode 3 includes a positive electrode current collector 3a and a positive electrode mixture layer 3b supported on the positive electrode current collector 3a, as shown in FIG. 2.

In the electrode group 1, as shown in FIG. 2, the negative electrode 2 and the positive electrode 3 are stacked in a state where the separator 4 is sandwiched between the negative electrode mixture layer 2b and the positive electrode mixture layer 3b. The electrode group 1, as such, can be obtained according to the following procedure. First, a plate-like negative electrode 2 and a plate-like positive electrode 3 are laminated together with a separator 4 interposed in between. Next, another separator 4 is stacked onto a positive electrode mixture layer 3b which is not opposed to the negative electrode 2, to produce a laminate. The laminate is wound with the negative electrode 2 on the outside. Then, a winding core is extracted, and the laminate is then pressed into a flat shape. Thus, the electrode group 1 shown in FIGS. 1 and 2 can be obtained.

A belt-like negative electrode terminal 5 is electrically connected to the negative electrode 2. A belt-like positive electrode terminal 6 is electrically connected to the positive electrode 3.

The nonaqueous electrolyte battery 100 shown in FIGS. 1 and 2 further includes a pouch 7 made of a laminate film, as the container.

The electrode group 1 is housed in the pouch 7 made of a laminate film with one end of each of the negative electrode terminal 5 and the positive electrode terminal 6 extending out from the pouch 7. A nonaqueous electrolyte, which is not shown, is housed in the pouch 7 made of a laminate film. The electrode group 1 is impregnated with the nonaqueous electrolyte. The circumference of the pouch 7 is heat-sealed. In this manner, the electrode group 1 and the nonaqueous electrolyte are sealed.

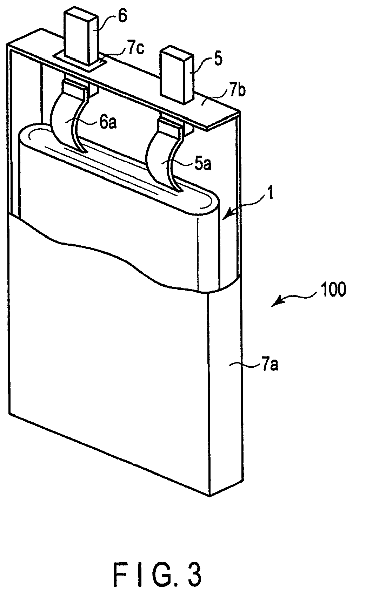

Next, a second example of a nonaqueous electrolyte battery according to a first embodiment will be described in detail with reference to FIG. 3.

FIG. 3 is a partially cutout perspective view of the nonaqueous electrolyte battery of the second example according to the first embodiment.

A nonaqueous electrolyte battery 100 shown in FIG. 3 is largely different from the nonaqueous electrolyte battery 100 of the first example in that a container is configured from a metal container 7a and a sealing plate 7b.

The nonaqueous electrolyte battery 100 shown in FIG. 3 includes the same electrode group 1 as the electrode group 1 of the nonaqueous electrolyte battery 100 of the first example. The difference between the first example and the second example lies in a point in that the second example shown in FIG. 3 uses a member 5a, which is used as the negative electrode terminal 5 in the first example, as a negative electrode tab, and a point in that the second example uses a member 6a, which is used as the positive electrode terminal 6 in the first example, as a positive electrode tab.

In the nonaqueous electrolyte battery 100 shown in FIG. 3, the electrode group 1 is housed in the metal container 7a. The metal container 7a further houses a nonaqueous electrolyte. The metal container 7a is sealed by a metal sealing plate 7b.

The sealing plate 7b includes a negative electrode terminal 5 and a positive electrode terminal 6. An insulating member 7c is interposed between the positive electrode terminal 6 and the sealing plate 7b. Thereby, the positive electrode terminal 6 and the sealing plate 7b are electrically insulated from each other.

The negative electrode terminal 5 is connected to the negative electrode tab 5a as shown in FIG. 3. Similarly, the positive electrode terminal 6 is connected to the positive electrode tab 6a.

(Method for Measuring Average Operating Voltage)

An open-circuit cell voltage ($OCV_{50}$) when a state of charge is 50% based on a rated capacity is used as an index of an average operating voltage. The $OCV_{50}$ is measured as follows.

Charging is performed at a current of 1 C rate for 0.5 hour under a 25°C environment so that the state of charge is 50% based on the rated capacity. After the nonaqueous battery is left for 1 hour under a 25°C environment after the charging is ended, a cell voltage is measured, and the value of the cell voltage is defined as the $OCV_{50}$.

(Method for Observing Surface State of Positive Electrode Included in Nonaqueous Electrolyte Battery Using Photoelectron Spectroscopy)

Next, a method for observing the surface state of the positive electrode included in the nonaqueous electrolyte battery, using photoelectron spectroscopy will be described.

### 1. Sampling

First, a nonaqueous electrolyte battery which is a subject of measurement is prepared. The prepared nonaqueous electrolyte battery is discharged until a battery voltage is 1.8 V or less. Then, the discharged nonaqueous electrolyte battery is dismantled under an inert atmosphere such as argon. An electrode group is taken out from the dismantled nonaqueous electrolyte battery. At this time, care should be taken to avoid electrical contact between a positive electrode and a negative electrode. The electrode group is taken out in a state where a repeated structure of a positive electrode, a separator, a negative electrode, a separator, and a positive electrode, as shown in FIG. 2, is maintained. The electrode group, thus taken out, is separated into the separator, the positive electrode, and the negative electrode, for example, by using tweezers or the like. The positive electrode thus obtained is immersed in an organic solvent such as ethyl methyl carbonate to wash the positive electrode. The washed positive electrode is dried.

Next, an electrode fragment having a size of about a square with 5 mm sides is cut out from the dried positive electrode using a cutter. This is used as a sample.

### 2. Measurement

The electrode fragment prepared above as the sample is set on a measurement stage. Then, the measurement stage on which the electrode piece is set is introduced into a photoelectron spectroscopy device (VG Theta Probe manufactured by Thermo Fisher Scientific), and the interior of the device is brought to a vacuum state. In the device, measurement is performed with an X-ray spot diameter set to 800 x 400 $\mu$m and using AlK$\alpha$ rays as excitation X-rays. Thus, the photoelectron spectrum of the sample is obtained.

### 3. Analysis

From the obtained photoelectron spectrum, an S atom abundance ratio $A_S$ is calculated from an area of a peak attributed to a 2p orbital of S, which appears in a binding energy region of 165 eV to 175 eV. From the photoelectron spectrum, an Ni atom abundance ratio $A_{Ni}$ is calculated from an area of a peak attributed to a 3p orbital of nickel, which appears in a binding energy region of 64 eV to 72 eV. The ratio $A_S/A_{Ni}$ of the S atom abundance ratio $A_S$ to the Ni atom abundance ratio $A_{Ni}$ is calculated from the atom abundance ratios thus obtained. The atom abundance ratios are calculated as follows. First, boron (B), carbon (C), oxygen (O), lithium (Li), nitrogen (N), fluorine (F), phosphorus (P), sulfur (S), titanium (Ti), manganese (Mn), cobalt (Co), and nickel (Ni) are set as constituent elements as a parameter. Then, the atom abundance ratio of each element is calculated by using an average matrix relative sensitivity factor method described in ISO18118. The inner core spectrum of each element used for the calculation is defined as follows. The inner core spectrum of B is defined as a B1s peak appearing in a binding energy region of 185 eV to 200 eV. The inner core spectrum of C is defined as a C1s peak appearing in a binding energy region of 280 eV to 295 eV. The inner core spectrum of O is defined as an O1s peak appearing in a binding energy region of 520 eV to 545 eV. The inner core spectrum of Li is defined as a Li1s peak appearing in a binding energy region of 50 eV to 60 eV. The inner core spectrum of N is defined as an N1s peak appearing in a binding energy region of 390 eV to 410 eV. The inner core spectrum of F is defined as an F1s peak appearing in a binding energy region of 675 eV to 695 eV. The inner core spectrum of P is defined as a P2p peak appearing in a binding energy region of 125 eV to 145 eV. The inner core spectrum of S is defined as an S2p peak appearing in a binding energy region of 165 eV to 175 eV. The inner core spectrum of Ti is defined as a Ti2p peak appearing in a binding energy region of 452 eV to 462 eV. The inner core spectrum of Mn is defined as an Mn2p peak appearing in a binding energy region of 630 eV to 660 eV. The inner core spectrum of Co is defined as a Co2p peak appearing in a binding energy region of 780 eV to 810 eV. The inner core spectrum of Ni is defined as an Ni3p peak appearing in a binding energy region of 64 eV to 72 eV.

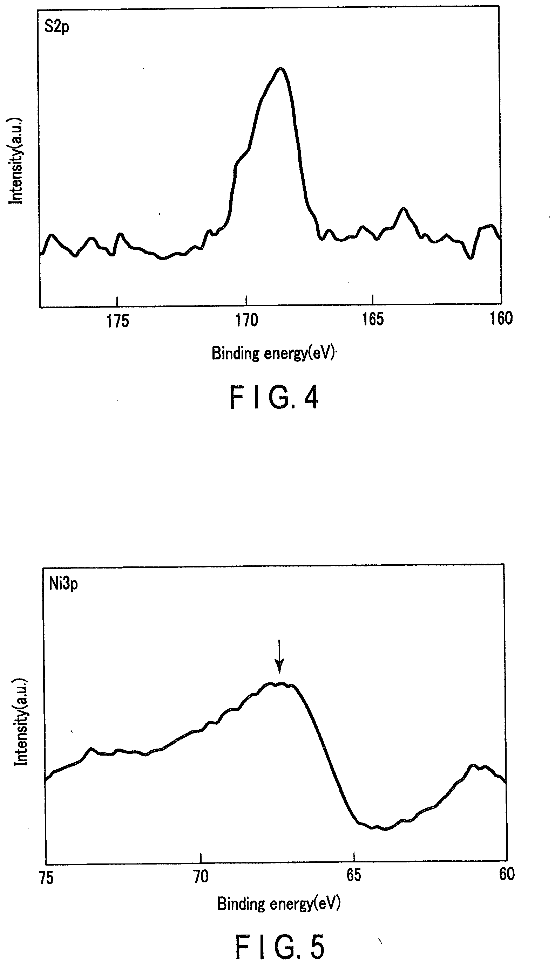

Photoelectron spectra as an example for a surface of a positive electrode included in a nonaqueous electrolyte battery of an example according to an embodiment are shown in FIGS. 4 and 5. In the photoelectron spectrum shown in FIG. 4, a peak appearing in a binding energy region of 165 eV to 175 eV is a peak attributed to a 2p orbital of S. In the photoelectron spectrum shown in FIG. 5, a peak appearing in a binding energy region of 64 eV to 72 eV is a peak attributed to a 3p orbital of Ni.

The ratio $A_S/A_{Ni}$ of each sample is calculated from the S atom abundance ratio $A_S$ and Ni atom abundance ratio $A_{Ni}$ thus obtained.

(Method for Confirming Presence of Protective Coating)

The presence of the protective coating formed on the positive electrode included in the nonaqueous electrolyte battery can be confirmed by the following method.

First, as described above, the ratio $A_S/A_{Ni}$ is calculated by analyzing the surface of the positive electrode using photoelectron spectroscopy.

On the other hand, the positive electrode binder is dissolved by immersing the positive electrode in a plastic container containing NMP, to remove the positive electrode mixture layer. Next, the NMP is dried, and the removed positive electrode mixture layer is then subjected to composition analysis. For example, inductively coupled plasma spectroscopy (ICP) can be used for the composition analysis.

From the results of the composition analysis, an abundance ratio of sulfur (S) to nickel (Ni) in the positive electrode is calculated. It is found that, when the abundance ratio is smaller than the ratio $A_S/A_{Ni}$ obtained by photoelectron spectroscopy, the sulfur on the surface of the positive electrode is not derived from the material of the positive electrode, but included in the protective coating formed on the surface of the positive electrode. More specifically, in this case, it is found that the protective coating including sulfur is formed on the positive electrode.

<Method for Measuring Ratio p/n>

The capacity ratio p/n of the positive electrode capacity p to the negative electrode capacity n in the nonaqueous electrolyte battery can be calculated from the capacity per unit area of the current collector for the mixture layer supported on one surface of each electrode.

1. Sampling

First, a nonaqueous electrolyte battery which is a subject for measurement is prepared. The prepared non-aqueous electrolyte battery is discharged until a battery voltage is 1.5 V (vs. Li/Li$^+$) or less. Then, the discharged non-aqueous electrolyte battery is dismantled under an inert atmosphere such as argon. An electrode group is taken out from the dismantled nonaqueous electrolyte battery. At this time, care should be taken to avoid electrical contact between a positive electrode and a negative electrode. The electrode group is taken out in a state where a repeated structure of a positive electrode, a separator, a negative electrode, a separator, and a positive electrode, as shown in FIG. 2, is maintained. The electrode group, thus taken out, is separated into the separator, the positive electrode, and the negative electrode by using, for example, insulated tweezers made of ceramics, or the like. The positive electrode and negative electrode thus obtained are each immersed in an organic solvent such as ethyl methyl carbonate to wash the positive electrode and the negative electrode. The washed positive electrode and negative electrode are dried.

Next, when each electrode mixture layer is supported on each surface of the current collecting foil, the mixture layer is dissolved by using a solvent such as N-methyl-2-pyrrolidone, to remove the mixture layer supported on one surface.

Next, an electrode fragment having a size of about a square with 2 cm sides is cut out from the positive electrode and the negative electrode using a cutter, scissors, or a photograph cutter. These are used as a positive electrode sample and a negative electrode sample.

2. Charge and Discharge Test

Next, a three electrode battery is produced using the positive electrode sample produced above as a working electrode, and using metal lithium as a counter electrode and a reference electrode. Similarly, another three electrode battery is produced using the negative electrode sample produced above as a working electrode. These three electrode batteries are subjected to a charge and discharge test according to the following procedure.

First, the three electrode battery is charged. Charging conditions are as follows. A current density is set to 0.3 mA/cm$^2$. For the three electrode battery of the positive electrode, a charge voltage is set to 4.2 V. For the three electrode battery of the negative electrode, a charge voltage is set to 1.3 V. The charging is performed under a 25°C environment for 10 hours.

The three electrode battery is put to rest for 10 minutes after charging. Subsequently, the three electrode battery is discharged. Discharge conditions are as follows. A current density is set to 0.3 mA/cm$^2$. In the three electrode battery of the positive electrode, a final voltage after discharge is set to 3.0 V. In the three electrode battery of the negative electrode, a final voltage after discharge is set to 1.8 V. The discharge is performed under a 25°C environment, with a current maintained constant. A discharge capacity during the discharge is measured, and the obtained discharge capacity is defined as an amount of current which can be discharged in 1 hour, i.e., 1 C.

Next, the three electrode battery is recharged. Charging conditions are as follows. A current rate is set to 0.2 C. In the three electrode battery of the positive electrode, a charge voltage is set to 4.2 V. In the three-electrode battery of the negative electrode, a charge voltage is set to 1.3 V. The charging is performed under a 25°C environment until a current rate becomes 0.05 C.

The three electrode battery is put to rest for 10 minutes after charging. Subsequently, the three electrode battery is discharged. Discharge conditions are as follows. A current rate is set to 0.2 C. In the three electrode battery of the positive electrode, a final voltage after discharge is set to 3.0 V. In the three electrode battery of the negative electrode, a final voltage after discharge is set to 1.8 V. The discharge is performed under a 25°C environment with the current maintained constant. A discharge amount in this case is measured as a discharge capacity at 0.2 C.

The discharge capacities at 0.2 C for the obtained positive electrode and negative electrode are respectively defined as p and n. A capacity ratio p/n can be calculated using p and n, thus obtained.

The nonaqueous electrolyte battery according to the first embodiment includes the negative electrode including an oxide of titanium; and the positive electrode including the nickel-cobalt-manganese composite oxide represented by the composition formula $Li_{1-a}Ni_xCo_yMn_zO_2$, subscripts x, y, and z satisfying an inequality $0.1 \leq x/(y + z) \leq 1.3$, subscript a satisfying $0 \leq a \leq 1$, and the ratio $A_S/A_{Ni}$ of the S atom abundance ratio $A_S$ to the Ni atom abundance ratio $A_{Ni}$ obtained by subjecting the surface of the positive electrode to a photoelectron spectroscopic measurement being 0.4 to 5. In the nonaqueous electrolyte battery, the ratio p/n of the capacity p of the positive electrode to the capacity n of the negative electrode is within a range of 1.2 to 2. Thereby, the nonaqueous electrolyte battery according to the first embodiment can exhibit a low average operating voltage, and at the same time exhibit excellent cycling characteristics.

(Second Embodiment)

According to a second embodiment a battery pack is provided. The battery pack includes the nonaqueous electrolyte battery according to the first embodiment.

The battery pack according to the second embodiment may include a plurality of nonaqueous electrolyte batteries. The plurality of nonaqueous electrolyte batteries may be electrically connected in series, or may be electrically connected in parallel. Alternatively, the plurality of nonaqueous electrolyte batteries may also be connected in a combination of a connection in series and a connection in parallel.

For example, the battery pack according to the second embodiment may include six of the nonaqueous electrolyte batteries of the first embodiment. These nonaqueous electrolyte batteries may be connected in series. The nonaqueous electrolyte batteries connected in series can constitute a battery module. That is, the battery pack according to the second embodiment may include a battery module.

The battery pack according to the second embodiment may include a plurality of battery modules. The plurality of battery modules may be connected in series, in parallel, or in a combination of a connection in series and a connection in parallel.

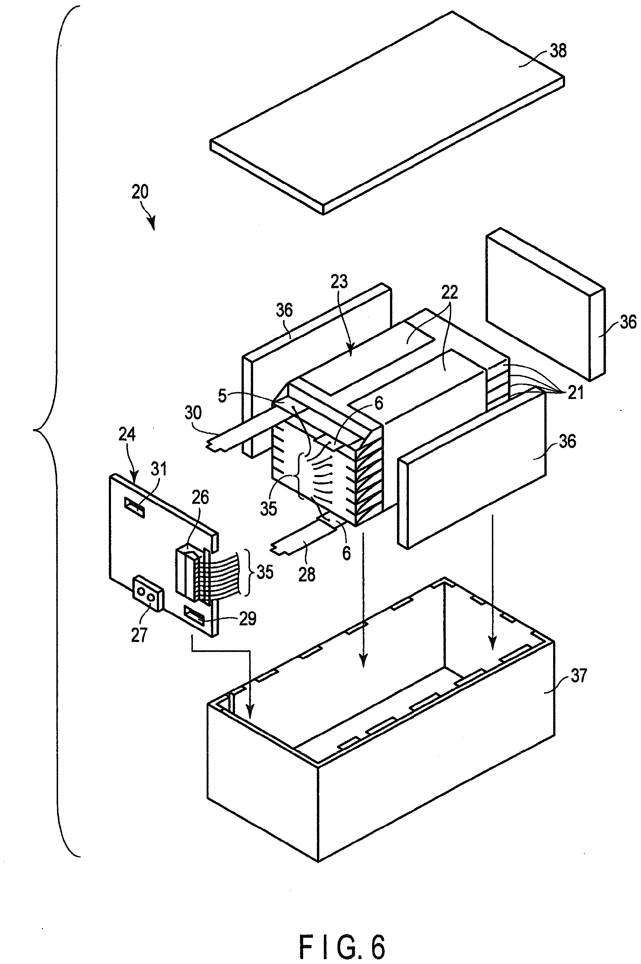

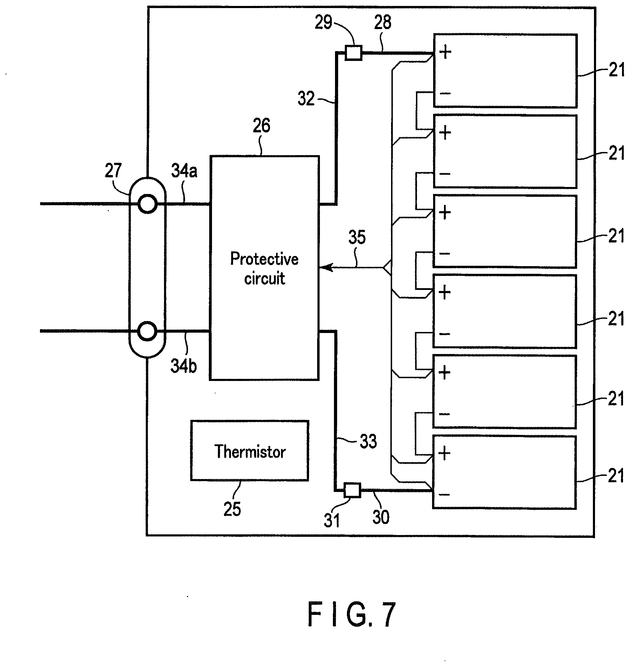

Hereinafter, an example of the battery pack according to the second embodiment will be described with reference to FIGS. 6 and 7.

FIG. 6 is an exploded perspective view of a battery pack of an example according to the second embodiment. FIG. 7 is a block diagram showing an electric circuit of the battery pack of FIG. 6.

A battery pack 20 shown in FIGS. 6 and 7 includes a plurality of unit cells 21. The unit cell 21 is the flat nonaqueous electrolyte battery 100 of an example according to the first embodiment described with reference to FIG. 3.

The plurality of unit cells 21 are stacked so that a negative electrode terminal 5 and a positive electrode terminal 6, which extend out of the container, are aligned in the same direction, and the unit cells 21 are bound by an adhesive tape 22 to constitute a battery module 23. As shown in FIG. 7, the unit cells 21 are electrically connected in series with one another.

A printed wiring board 24 is arranged opposite to the side surface of the unit cell 21 from which the negative electrode terminal 5 and the positive electrode terminal 6 extend. As shown in FIG. 7, a thermistor 25, a protective circuit 26, and a conducting terminal 27 that conducts electricity to external devices are mounted on the printed wiring board 24. An insulating plate (not shown) is attached to the surface of the printed wiring board 24 facing the battery module 23 to avoid unnecessary connection with the wiring of the battery module 23.

A positive electrode lead 28 is connected to the positive electrode terminal 6 positioned on the lowermost layer of the battery module 23, and one end of the positive electrode lead 28 is inserted into and electrically connected to a positive electrode connector 29 of the printed wiring board 24. A negative electrode lead 30 is connected to the negative electrode terminal 5 positioned on the uppermost layer of the battery module 23, and one end of the negative electrode lead 30 is inserted into and electrically connected to a negative electrode connector 31 of the printed wiring board 24. These connectors 29 and 31 are connected to the protective circuit 26 through wirings 32 and 33 formed on the printed wiring board 24.

The thermistor 25 is used to detect a temperature of the unit cell 21, and detection signals are transmitted to the protective circuit 26. The protective circuit 26 can shut off a positive-side wiring 34a and a negative-side wiring 34b between the protective circuit 26 and the conductive terminal 27, under a predetermined condition. An example of a predetermined condition is when the temperature detected by the thermistor 25 is a predetermined temperature or higher, for example. Also, another example of a predetermined condition is when an over-charge, over-discharge, over-current, or the like of the unit cell 21 is detected, for example. The detecting of the over-charge or the like is performed for individual unit cells 21 or the entire battery module 23 as a whole. When detecting is performed for individual unit cells 21, detecting may be performed with regards to a battery voltage, or detecting may be performed with regards to a positive electrode potential or a negative electrode potential. In the latter case, a lithium electrode is inserted in each individual unit cell 21 as a reference electrode. In the case of the battery pack 20 in FIGS. 6 and 7, a wiring 35 for detecting voltage is connected to each unit cell 21. Detection signals are transmitted to the protective circuit 26 through these wirings 35.

A protective sheet 36 made of rubber or resin is arranged on each of the three side surfaces of the battery module 23 excluding the side surface from which the positive electrode terminal 6 and the negative electrode terminal 5 project.

The battery module 23 is housed in a housing container 37 together with each of the protective sheets 36 and printed wiring board 24. More specifically, each of the protective sheets 36 are arranged on both inside surfaces along a long-side direction and on one of the inside surfaces along a short-side direction of the housing container 37, and the printed wiring board 24 is arranged on an inside surface opposite to the protective sheet 36 that is arranged along the short-side direction. The battery module 23 is positioned in a space enclosed by the protective sheets 36 and the printed wiring board 24. A cover 38 is mounted on an upper side of the housing container 37.

A heat-shrinkage tape may be used in place of the adhesive tape 22 to secure the battery module 23. In this case, after the protective sheet is arranged on both sides of the battery module and the heat-shrinkage tape is wound around the battery module and protective sheets, the heat-shrinkage tape is contracted by heating to fasten the battery module together.

A configuration in which the unit cells 21 are connected in series is shown in FIGS. 6 and 7. However, these unit cells may be connected in parallel to increase the capacity of the battery. The assembled battery packs may be connected in series, in parallel, or both in series and in parallel, also.

Embodiments of the battery pack according to the second embodiment are appropriately changed depending on applications. Preferable applications of the battery pack according to the second embodiment are those in which favorable cycle characteristics at large current are desired. Specific examples of the applications include power sources for digital cameras, and power sources mounted on vehicles such as two to four-wheeled hybrid electric cars, two to four-wheeled electric cars, and assist bicycles. The battery pack according to the second embodiment is particularly preferably used for power sources mounted on vehicles.

Since the battery pack according to the second embodiment includes the nonaqueous electrolyte battery according to the first embodiment, the battery pack can exhibit a low average operating voltage and excellent cycling characteristics.

[Examples]

Hereinafter, the embodiments will be described in more detail with reference to examples.

(Example 1)

In Example 1, a nonaqueous electrolyte battery of Example 1 was produced according to the following procedure.

<Production of Positive Electrode>

91% by weight of a lithium nickel-cobalt-manganese composite oxide ($LiNi_{0.5}Co_{0.3}Mn_{0.2}O_2$) powder as a positive electrode active material, 2.5% by weight of acetylene black, 3% by weight of graphite, and 3.5% by weight of polyvinylidene fluoride (PVdF) were added to N-methyl-2-pyrrolidone and mixed to prepare a slurry. The slurry was applied onto both surfaces of a current collector made of an aluminum foil having a thickness of 15 $\mu$m to form an applied coat, and the applied coat was dried. Then, the dried applied coat was pressed. Thus, a positive electrode having a positive electrode mixture layer with a density of 3.0 g/cm$^3$ was produced.

<Production of Negative Electrode>

A spinel type lithium titanate powder as a negative electrode active material, graphite, acetylene black, and PVdF were added to NMP and mixed to prepare a slurry. Here, the blending ratio of the spinel type lithium titanate powder : graphite : acetylene black : PVdF was set to 85% by weight : 5% by weight : 3% by weight : 7% by weight.

Subsequently, the slurry was applied onto both surfaces of a current collector made of an aluminum foil having a thickness of 11 $\mu$m to form an applied coat, and the applied coat was dried. Then, the dried applied coat was pressed. Thus, a negative electrode having a negative electrode mixture layer with a density of 2.0 g/cm$^3$ was produced.

<Production of Electrode Group>

The positive electrode produced above, a separator made of a polyethylene porous film having a thickness of 20 $\mu$m, the negative electrode produced above, and another separator were laminated in this order, to obtain a laminate. The obtained laminate was then spirally wound so that the negative electrode would be positioned on the outermost periphery to produce an electrode group. This was heat-pressed at 90°C to produce a flat-shaped electrode group having a width of 58 mm, a height of 95 mm, and a thickness of 3.0 mm.

The obtained electrode group was housed in a pouch. The pouch was made of a laminate film including an aluminum foil having a thickness of 40 $\mu$m and a polypropylene layer formed on each surface of the aluminum foil. The laminate film had a thickness of 0.1 mm. The circumference of the pouch was heat-sealed aside from a portion left unsealed as an opening. Then, the pouch housing the electrode group was dried under vacuum at 80°C for 24 hours.

<Preparation of Nonaqueous Electrolyte Solution>

A mixed solvent was prepared by mixing ethylene carbonate (EC) and methylethyl carbonate (MEC) at a volume ratio of 1 : 2. A nonaqueous electrolyte solution was prepared by dissolving 1.0 mol/L of lithium hexafluorophosphate (LiPF$_6$) into the mixed solvent and dissolving 1.0% by mass of an additive LiTFSI into the mixed solvent.

<Production of Battery>

The nonaqueous electrolyte solution was injected into the above pouch housing the electrode group via the opening left unsealed. Then, the opening was heat-sealed to seal the pouch, and thereby a nonaqueous electrolyte battery having a structure as shown in FIGS. 1 and 2 was produced. Two nonaqueous electrolyte batteries were produced using the same manufacturing condition.

<Adjustment to Initial State>

Next, these nonaqueous electrolyte batteries were subjected to initial charging under a 25°C environment. A charging condition of the initial charging was as follows. The nonaqueous electrolyte batteries were subjected to initial charging at a 0.2 C rate until the cell voltage was 2.3 V. Then, these nonaqueous electrolyte batteries were stored for 50 hours at an environmental temperature of 60°C to perform aging. Then, these nonaqueous electrolyte batteries were discharged at a 0.2 C rate at an environmental temperature of 25°C until the voltage reached 1.5 V. Then, the nonaqueous electrolyte battery was charged to a state of charge of 50% to set the nonaqueous electrolyte battery to an initial state.

<Measurement of Capacity Ratio p/n of Positive Electrode Capacity p to Negative Electrode Capacity n >

The capacity ratio p/n of the nonaqueous electrolyte battery of Example 1, which had been adjusted to the initial state, was measured according to the procedure described above. The ratio p/n of the nonaqueous electrolyte battery of Example 1 was 1.4.

<Measurement of Atom Abundance Ratio ($A_S$/$A_{Ni}$) of S and Ni on Surface of Positive Electrode Surface>

The surface state of the positive electrode was observed by photoelectron spectroscopy according to the procedure described above.

Part of a photoelectron spectrum obtained for the surface of the positive electrode of the nonaqueous electrolyte battery at the initial state is shown in each of FIGS. 4 and 5. A peak appearing in a binding energy region of 165 eV to 175 eV shown in FIG. 4 is a peak derived from a 2p orbital of S. A peak appearing in a binding energy region of 64 eV to 72 eV shown in FIG. 5 is a peak derived from a 3p orbital of Ni.

According to the procedure described above, a ratio $A_S$/$A_{Ni}$ was calculated from the result obtained by photoelectron spectroscopy. The ratio $A_S$/$A_{Ni}$ of Example 1 was 0.7.

This result and the ICP analysis described above showed that a surface state including S was formed on the surface of each of the negative electrode active material particles included in the positive electrode.

(Comparative Example 1)

In Comparative Example 1, a nonaqueous electrolyte battery of Comparative Example 1 was produced in the same manner as in Example 1, except that an additive was not included in a nonaqueous electrolyte.

The nonaqueous electrolyte battery of Comparative Example 1 was adjusted to an initial state in the same manner as in Example 1, and a capacity ratio p/n of a positive electrode to a negative electrode, and atom abundance ratios ($A_S$ and $A_{Ni}$) of S and Ni on the surface of the positive electrode were measured. The results are shown in the following Table 2.

<Cycle Test>

Each of the nonaqueous electrolyte battery of Example 1 and the nonaqueous electrolyte battery of Comparative Example 1 were subjected to 10000 charge and discharge cycles under a 45°C environment. The batteries were charged and discharged in a voltage range of 1.5 V to 2.8 V at a 1 C rate.

<Measurement of Electrical Resistance>

Coinciding with the above cycle test, values of electrical resistances of the nonaqueous electrolyte batteries before and after the cycle test were measured according to the following procedure.

First, the nonaqueous electrolyte batteries were charged to a state of charge of 50% based on a rated capacity. Then, these nonaqueous electrolyte batteries were discharged under a 25°C environment. The discharge herein was performed for 10 seconds at a 10 C rate. The electrical resistance in this case was measured as follows. A voltage before an application of current was defined as $V_0$. On the other hand, a voltage during discharge for 10 seconds was defined as $V_{10}$. When a current value corresponding to a 10 C rate is defined as $I_{10C}$, a 10 second resistance $R_{10sec}$ is calculated from the following (formula 1) .

$$R_{10sec} = |V_{10} - V_0|/I_{10C} \qquad (1)$$

When $R_{10sec}$ before cycles and $R_{10sec}$ after cycles for each of the batteries were measured, and respectively defined as $R_s$ and $R_f$, an increase ratio T of the electrical resistance before and after the cycle is calculated from the following (formula 2).

$$T = (R_f - R_s)/R_s \qquad (2)$$

When $R_s$, $R_f$, and T of the nonaqueous electrolyte battery of Comparative Example 1 are set as standards (= 1), relative values of $R_s$, $R_f$, and T of the nonaqueous electrolyte battery of Example 1 to those of Comparative Example 1 were respectively 0.85, 0.71, and 0.83.

(Examples 2 to 4)

In Examples 2 to 4, nonaqueous electrolyte batteries of Examples 2 to 4 were produced in the same manner as in Example 1, except that nonaqueous electrolytes were prepared with a proportion by weight of the additive (LiTFSI) included in the nonaqueous electrolytes having been changed in a range of 1.0% by weight to 3.0% by weight, as shown in the following Table 1.

(Examples 5 to 7)

In Examples 5 to 7, nonaqueous electrolyte batteries of Examples 5 to 7 were produced in the same manner as in Example 1, except that a composition of a nickel-cobalt-manganese composite oxide included in a positive electrode was altered to change x/(y + z) in a range of 0.1 to 1.3, and a ratio p/n of capacities of the positive electrode and negative electrode was changed in a range of 1.2 to 2.0, as shown in the following Table 1.

(Example 8)

In Example 8, a nonaqueous electrolyte battery of Example 8 was produced in the same manner as in Example 1, except that the kind of additive included in the nonaqueous electrolyte was changed.

(Examples 9 to 11)

In Examples 9 to 11, nonaqueous electrolyte batteries of Examples 9 to 11 were produced in the same manner as in Example 1, except that the kind of additive included in the nonaqueous electrolyte was changed, and a ramsdellite type lithium titanate powder ($Li_2Ti_3O_7$ : LTO(R)), monoclinic titanium dioxide ($TiO_2$ : $TiO_2$), and a monoclinic niobium titanium composite oxide ($Nb_2TiO_7$ : NTO) were used as a negative electrode active material as shown in the following Table 1.

(Example 12)

In Example 12, a nonaqueous electrolyte battery of Example 12 was produced in the same manner as in Example 1, except that a nonaqueous electrolyte battery was stored for 10 hours at an environmental temperature of 60°C after initial charging, to perform the aging process.

(Comparative Example 2)

In Comparative Example 2, a nonaqueous electrolyte battery of Comparative Example 2 was produced in the same manner as in Example 1, except that an additive was not included in the nonaqueous electrolyte, and a ratio p/n of the positive electrode capacity and the negative electrode capacity was set to 1.0.

(Comparative Example 3)

In Comparative Example 3, a nonaqueous electrolyte battery of Comparative Example 3 was produced in the same manner as in Example 1, except that a proportion by mass of the additive agent (LiTFSI) included in an electrolyte was set to 5.0% by mass.

(Comparative Example 4)

In Comparative Example 4, a nonaqueous electrolyte battery of Comparative Example 4 was produced in the same manner as in Example 1, except that an aging process was not performed.

(Comparative Example 5)

In Comparative Example 5, a nonaqueous electrolyte battery of Comparative Example 5 was produced in the same manner as in Example 1, except that an oxide in which x/(y + z) had been 2.0 ($LiNi_{0.8}Co_{0.2}Mn_{0.2}O_2$) was used as a nickel-cobalt-manganese composite oxide included in the positive electrode, and an additive was not included in the nonaqueous electrolyte.

(Comparative Example 6)

In Comparative Example 6, a nonaqueous electrolyte battery of Comparative Example 6 was produced in the same manner as in Example 1, except that an oxide in which x/(y + z) had been 0.05 ($LiNi_{0.05}Co_{0.5}Mn_{0.45}O_2$) was used as a nickel-cobalt-manganese composite oxide included in the positive electrode, and an additive was not included in a nonaqueous electrolyte.

(Comparative Example 7)

In Comparative Example 7, a nonaqueous electrolyte battery of Comparative Example 7 was produced in the same manner as in Example 1, except that a ratio p/n of the positive electrode capacity and the negative electrode capacity was set to 1.0.

(Comparative Example 8)

In Comparative Example 8, a nonaqueous electrolyte battery of Comparative Example 8 was produced in the same manner as in Example 1, except that a nonaqueous electrolyte battery was stored for 50 hours at an environmental temperature of 25°C after initial charging, to perform the aging process.

(Comparative Example 9)

In Comparative Example 9, a nonaqueous electrolyte battery of Comparative Example 9 was produced in the same manner as in Example 1, except that a nonaqueous electrolyte battery was stored for 10 minutes at an environmental temperature of 60°C after initial charging, to perform the aging process.

(Comparative Example 10)

In Comparative Example 10, a nonaqueous electrolyte battery of Comparative Example 10 was produced in the same manner as in Example 1, except that a nonaqueous electrolyte battery was stored for 100 hours at an environmental temperature of 60°C after initial charging, to perform the aging process.

With regards to the nonaqueous electrolyte batteries of Examples 1 to 12 and Comparative Examples 1 to 10, the composition of the active material included in the positive electrode, additive included in the nonaqueous electrolyte, concentration of the additive in the nonaqueous electrolyte, whether an aging process had been performed or not, and the active material included in the positive electrode are summarized in the following Tables 1 and 3. Conditions of the aging process performed for the nonaqueous electrolyte batteries of Examples 1 to 12 and Comparative Examples 1 to 10 are summarized in the following Tables 2 and 4.

The nonaqueous electrolyte batteries of Examples 2 to 12 and Comparative Examples 2 to 10 were subjected to measurement of the ratio p/n of the positive electrode capacity to the negative electrode capacity, measurement of the atom abundance ratio ($A_S/A_{Ni}$) of S and Ni on the positive electrode surface, a cycle test, and measurement of resistance for 10 seconds after and before the cycle test in the same manner as in Example 1. The results are shown in the following Tables 2 and 4.

<Measurement of OCV at SOC of 50%>

An OCV at an SOC of 50% ($OCV_{50}$) for each of the nonaqueous electrolyte batteries of Examples 1 to 12 and Comparative Examples 1 to 10, which are adjusted to the initial state, was measured according to the procedure described above. When the $OCV_{50}$ of Comparative Example 2 is set as the standard (= 1), the $OCV_{50}$ of Example 1 was 0.97. The $OCV_{50}$ of each of the other nonaqueous electrolyte batteries is shown in the following Tables 2 and 4, based on the $OCV_{50}$ of Comparative Example 2 as the standard (= 1).

[Table 1]

| | Composition of Positive Electrode Active Material LiNi$_x$Co$_y$Mn$_z$O$_2$ | | | | | Additive | Concentration of Additive (weight %) | Whether aging had been performed or not | Negative Electrode Active Material |
|---|---|---|---|---|---|---|---|---|---|
| | x | y | z | x/(y+z) | Relation between y and z : y-z | | | | |
| Example 1 | 0.50 | 0.30 | 0.20 | 1.00 | 0.10 | LiTFSI | 1.0 | performed | LTO(S) |
| Example 2 | 0.50 | 0.30 | 0.20 | 1,00 | 0.10 | LiTFSI | 0.3 | performed | LTO(S) |
| Example 3 | 0.50 | 0.30 | 0.20 | 1.00 | 0.10 | UTFSI | 20 | performed | LTO(S) |
| Example 4 | 0.50 | 0.30 | 0.20 | 1.00 | 0.10 | LiTFSI | 3.0 | performed | LTO(S) |
| Example 5 | 0.20 | 0.60 | 0.20 | 0.25 | 0.40 | LiTFSI | 1.0 | performed | LTO(S) |
| Example 6 | 0.50 | 0.20 | 0.30 | 1.00 | -0.10 | LiTFSI | 1.0 | performed | LTO(S) |
| Example 7 | 0.45 | 0.30 | 0.25 | 0.82 | 0.05 | LiTFSI | 1.0 | performed | LTO(S) |
| Example 8 | 0.50 | 0.30 | 0.20 | 1.00 | 0.10 | DMSF | 10 | performed | LTO(S) |
| Example 9 | 0.50 | 0.30 | 0.20 | 1.00 | 0.10 | DMS | 1.0 | performed | LTO(R) |
| Example 10 | 0.50 | 0.30 | 0.20 | 1.00 | 0.10 | 1.4-BS | 1.0 | performed | TiO$_2$ |
| Example 11 | 0.50 | 0.30 | 0.20 | 100 | 0-10 | DMSFA | 1.0 | performed | NTO |
| Comparative Example 1 | 0.50 | 0.30 | 0.20 | 1.00 | 0.10 | - | 0.0 | performed | LTO(S) |
| Comparative Example 2 | 0.50 | 0.30 | 0.20 | 1.00 | 0.10 | - | 0.0 | performed | LTO(S) |
| Comparative Example 3 | 0.50 | 0.30 | 0.20 | 1.00 | 0.10 | LiTFSI | 5.0 | performed | LTO(S) |
| Comparative Example 4 | 0.50 | 0.30 | 0.20 | 1.00 | 0.10 | LiTFSI | 1.0 | not performed | LTo(S) |
| Comparative Example 5 | 0.80 | 0.20 | 0.20 | 2.00 | 0.00 | - | 0.0 | performed | LTO(S) |
| Comparative Example 6 | 0.05 | 0.50 | 0.45 | 0.05 | 0.05 | - | 0.0 | performed | LTO(S) |

[Table 2]

| | Ratio p/n | $A_S/A_{Ni}$ | Relative Value of $OCV_{50}$ | Relative Value of Initial Electric Resistance | Relative Value of Electric Resistance after Deterioration | Relative Value of Rate of Increase of Electric Resistance | Conditions of Aging Process | | |
|---|---|---|---|---|---|---|---|---|---|
| | | | | | | | Voltage | Temperature | Time |
| Example 1 | 1.4 | 0.7 | 0.97 | 0.85 | 0.71 | 0.83 | 2.3 V | 60°C | 50 hours |
| Example 2 | 1.4 | 0.4 | 0.97 | 0.86 | 0.85 | 0.99 | 2.3 V | 60°C | 50 hours |
| Example 3 | 1.4 | 1.8 | 0.97 | 0.85 | 0.65 | 0.76 | 2.3 V | 60°C | 50 hours |
| Example 4 | 1.4 | 4.9 | 0.97 | 0.98 | 0.95 | 0.97 | 2.3 V | 60°C | 50 hours |
| Example 5 | 1.4 | 1.5 | 0.98 | 0.85 | 0.64 | 0.75 | 2.3 V | 60°C | 50 hours |
| Example 6 | 2.0 | 0.4 | 0.92 | 0.86 | 0.85 | 0.99 | 2.3 V | 60°C | 50 hours |
| Example 7 | 1.2 | 0.7 | 0.98 | 0.85 | 0.69 | 0.81 | 2.3 V | 60°C | 50 hours |
| Example 8 | 1.5 | 0.7 | 0.96 | 0.85 | 0.72 | 0.84 | 2.3 V | 60°C | 50 hours |
| Example 9 | 1.5 | 0.7 | 0.97 | 0.85 | 0.72 | 0.84 | 2.3 V | 60°C | 50 hours |
| Example 10 | 1.6 | 0.7 | 0.97 | 0.85 | 0.73 | 0.85 | 2.3 V | 60°C | 50 hours |
| Example 11 | 1.8 | 0.7 | 0.97 | 0.85 | 0.75 | 0.88 | 2.3 V | 60°C | 50 hours |
| Comparative Example 1 | 1.4 | undetected | 0.97 | 1.00 (standard) | 1.00 (standard) | 1.00 (standard) | 2.3 V | 60°C | 50 hours |
| Comparative Example 2 | 1.0 | undetected | 1.00 (standard) | 0.85 | 0.83 | 0.97 | 2.3 V | 60°C | 50 hours |
| Comparative Example 3 | 1.4 | 8.9 | 0.98 | 1.19 | 1.09 | 0.92 | 2.3 V | 60°C | 50 hours |

| | Ratio p/n | $A_S/A_{Ni}$ | Relative Value of $OCV_{50}$ | Relative Value of Initial Electric Resistance | Relative Value of Electric Resistance after Deterioration | Relative Value of Rate of Increase of Electric Resistance | Conditions of Aging Process | | |
|---|---|---|---|---|---|---|---|---|---|
| | | | | | | | Voltage | Temperature | Time |
| Comparative Example 4 | 1.4 | 0.2 | 0.98 | 0.85 | 0.98 | 1.15 | - | - | - |
| Comparative Example 5 | 1.4 | undetected | 1.01 | 0.85 | 1.12 | 1.31 | 2.3 V | 60°C | 50 hours |
| Comparative Example 6 | 1.4 | undetected | 1.01 | 0.86 | 1.09 | 1.27 | 2.3 V | 60°C | 50 hours |

[Table 3]

| | Composition of Positive Electrode Active Material $UiNi_xCo_yMn_zO_2$ | | | | | Additive | Concentration of Additive (weight %) | Whether aging had been performed or not | Negative Electrode Active Material |
|---|---|---|---|---|---|---|---|---|---|
| | x | y | z | x/(y+z) | Relation between y and z : y-z | | | | |
| Example 12 | 0.50 | 0.30 | 0.20 | 1.00 | 0.10 | LiTFSI | 1.0 | performed | LTO(S) |
| Comparative Example 7 | 0.50 | 0.30 | 0.20 | 1.00 | 0.10 | LiTFSI | 1.0 | performed | LTO(S) |
| Comparative Example 8 | 0.50 | 0.30 | 0.20 | 1.00 | 0.10 | LiTFSI | 1.0 | performed | LTO(S) |
| Comparative Example 9 | 0.50 | 0.30 | 0.20 | 1.00 | 0.10 | LiTFSI | 1.0 | performed | LTO(S) |
| Comparative Example 10 | 0.50 | 0.30 | 0.20 | 1.00 | 0.10 | LiTFSI | 1.0 | performed | LTO(S) |

EP 2 980 895 B1

[Table 4]

| | Ratio p/n | $A_S/A_{Ni}$ | Relative Value of $0.CV_{50}$ | Relative Value of Initial Electric Resistance | Relative Value of Electric Resistance after Deterioration | Relative Value of Rate of Increase of Electric Resistance | Conditions of Aging Process | | |
|---|---|---|---|---|---|---|---|---|---|
| | | | | | | | Voltage | Temperature | Time |
| Example 12 | 1.4 | 0.5 | 0.97 | 0.86 | 0.83 | 0.97 | 2.3 V | 60°C | 10 hours |
| Comparative Example 7 | 1.0 | 6.2 | 0.99 | 1.21 | 1.11 | 0.92 | 2.3 V | 60°C | 50 hours |
| Comparative Example 8 | 1.4 | 0.2 | 0.98 | 0.86 | 0.99 | 1.16 | 2.3 V | 25°C | 50 hours |
| Comparative Example 9 | 1.4 | 0.3 | 0.97 | 0.86 | 0.95 | 1.10 | 2.3 V | 60°C | 10 minutes |
| Comparative Example 10 | 1.4 | 5.8 | 0.98 | 1.18 | 1.10 | 0.93 | 2.3 V | 60°C | 100 hours |

From the results of Tables 2 and 4, the nonaqueous electrolyte batteries of Examples 1 to 12, in which x/(y + z) is 0.1 to 1.3, and $A_S/A_{Ni}$ is 0.4 to 5, are found to have a lower rate of increase of electrical resistance after 10000 cycles than that of the nonaqueous electrolyte battery of Comparative Example 1. The result shows that in the nonaqueous electrolyte batteries of Examples 1 to 12, the structural deterioration of the surface of the positive electrode active material during the cycles, which may be caused by an over-discharge state involving excess insertion of Li at the surface of the positive electrode, and an over-potential during reduction, are prevented, thereby suppressing the increase in the electrical resistance.

On the other hand, in the nonaqueous electrolyte battery of Comparative Example 1, a rate of increase in electrical resistance after cycles was greater than those of the nonaqueous electrolyte batteries of Examples 1 to 12. This is considered to be because the electrolyte solution did not include an additive in the nonaqueous electrolyte battery of Comparative Example 1, and therefore, the nonaqueous electrolyte battery of Comparative Example 1 cannot suppress the deterioration reaction at the surface of the positive electrode active material caused by the over-discharge and reductive over-potential. Similarly, in the nonaqueous electrolyte batteries of Comparative Examples 5 and 6, in which the electrolyte solution had not included an additive, rates of increase in electrical resistance after cycles was greater than those of Examples 1 to 12. The reason is also considered to be the same as that of Comparative Example 1.

In the nonaqueous electrolyte battery of Comparative Example 2, a rate of increase in electrical resistance after cycles was smaller than that of the nonaqueous electrolyte battery of Comparative Example 1, and comparable to those of the nonaqueous electrolyte batteries of Examples 1 to 12. However, the nonaqueous electrolyte battery of Comparative Example 2 had an $OCV_{50}$ that was higher than those of the nonaqueous electrolyte batteries of Examples 1 to 12. That is, an average operating voltage could not be reduced in Comparative Example 2.

In the nonaqueous electrolyte battery of Comparative Example 3, a rate of increase of electrical resistance after cycles was smaller than that of the nonaqueous electrolyte battery of Comparative Example 1, as in the nonaqueous electrolyte batteries of Examples 1 to 12. However, as shown in Table 2, the nonaqueous electrolyte battery of Comparative Example 3 had high initial electrical resistance and poor input and output characteristics. This is considered to be because the amount of the additive agent added into the electrolyte solution had been in excess, which resulted in formation of an excess protective coating on the positive electrode surface, thereby inhibiting electron conductivity and ion conductivity. Therefore, in the nonaqueous electrolyte battery of Comparative Example 3, although the increasing rate of the electrical resistance was reduced by the excess protective coating, an over-potential was apt to be applied to the positive electrode during the discharge of the cycle test, and an adverse effect caused by the over-potential canceled out the effect of surface protection. Because of that, the nonaqueous electrolyte battery of Comparative Example 3 had a relative value of an electrical resistance after deterioration that was higher than that of the nonaqueous electrolyte battery of Comparative Example 1.

In the nonaqueous electrolyte battery of comparative Example 4, a rate of increase of electrical resistance after cycles was higher than that of the nonaqueous electrolyte battery of Example 1. It was found from photoelectron spectroscopy analysis of the positive electrode surface and ICP analysis of the positive electrode mixture layer, that a stable surface state including S was not formed on the surface in the nonaqueous electrolyte battery of Comparative Example 4. From the comparison of this result with the result of Example 1, it is presumed that the reaction of the additive on the positive electrode surface is promoted by the aging performed in Example 1, forming a stable surface state including S. In the nonaqueous electrolyte battery of Example 1, it is considered that the stable surface state including S is formed on the positive electrode, which can suppress an increase in electrical resistance as compared with Comparative Example 4, in which such a surface state is not formed on the positive electrode.

In the nonaqueous electrolyte battery of Comparative Example 7, a rate of increase of electrical resistance after cycles was smaller than that of the nonaqueous electrolyte battery of Comparative Example 1, as in the nonaqueous electrolyte batteries of Examples 1 to 12. However, as shown in Table 4, the nonaqueous electrolyte battery of Comparative Example 7 had a high initial electrical resistance and poor input and output characteristics. This is considered to be because the potential of the positive electrode during charging is high, thereby an excess protective coating forms on the surface of the positive electrode, inhibiting electron conductivity and ion conductivity. Therefore, in the nonaqueous electrolyte battery of Comparative Example 7, although the rate of increase of electrical resistance was reduced by the excess protective coating, an over-potential was apt to be applied to the positive electrode during the discharge of the cycle test, and an adverse effect caused by the over-potential canceled out the effect of surface protection. Because of that, the nonaqueous electrolyte battery of Comparative Example 7 had a relative value of an electrical resistance after deterioration that was higher than that of the nonaqueous electrolyte battery of Comparative Example 1.

In comparative Examples 8 and 9, rates of increase of electrical resistance after cycles were higher than that in Example 1. It was found from photoelectron spectroscopy analysis of the positive electrode surface and ICP analysis of the positive electrode mixture layer, that a stable surface state including S was not formed on the surface in the nonaqueous electrolyte batteries of Comparative Examples 8 and 9. It is considered that the stable surface including S was not sufficiently formed on the surface of the positive electrode in these nonaqueous electrolyte batteries, since an aging temperature was low, or an aging time was short.

In the nonaqueous electrolyte battery of Comparative Example 10, a rate of increase of electrical resistance after cycles was smaller than that of the nonaqueous electrolyte battery of Comparative Example 1, as in the nonaqueous electrolyte battery of Examples 1 to 12. However, as shown in Table 4, the nonaqueous electrolyte battery of Comparative Example 10 had a high initial electrical resistance and poor input and output characteristics. This is considered to be because an aging time was too long, leading to a formation of an excess protective coating on the positive electrode surface, inhibiting electron conductivity and ion conductivity. Therefore, in the nonaqueous electrolyte battery of Comparative Example 10, although the rate of increase of the electrical resistance is reduced by the excess protective coating, an over-potential was apt to be applied to the positive electrode during the discharge of the cycle test, and an adverse effect caused by the over-potential canceled out the effect of surface protection. Because of that, the nonaqueous electrolyte battery of Comparative Example 10 had a relative value of an electrical resistance after deterioration that was higher than that of the nonaqueous electrolyte battery of Comparative Example 1.

As can be seen from the results of Tables 2 and 4, the nonaqueous electrolyte batteries of Examples 1 to 12 can suppress the increase in electrical resistance after cycles as compared with the nonaqueous electrolyte batteries of Comparative Examples 1, 4 to 6, 8, and 9, and can reduce the average operating voltage as compared with the nonaqueous electrolyte battery of Comparative Example 2. It is found that the nonaqueous electrolyte batteries of Examples 1 to 12 can reduce the initial electrical resistance and the electrical resistance after deterioration as compared with the nonaqueous electrolyte batteries of Comparative Examples 3, 7, and 10. For this reason, it is found that the nonaqueous electrolyte batteries of Examples 1 to 12 are more excellent than the nonaqueous electrolyte batteries of Comparative Examples 1 to 10 in that the nonaqueous electrolyte batteries of Examples 1 to 12 exhibit at least one of, a lower average operating voltage and a more excellent cycling characteristics, relative to those of the nonaqueous electrolyte batteries of Comparative Examples 1 to 10.

In the nonaqueous electrolyte batteries of Examples 1 to 12, the additive including sulfur in the nonaqueous electrolyte is oxidatively decomposed on the positive electrode during aging after the initial charge. As a result, the protective coating is formed on the positive electrode surface. The nonaqueous electrolyte batteries of Examples 1 to 12 can exhibit a low average operating voltage and excellent cycling characteristics due to the protective coating.

The nonaqueous electrolyte batteries according to at least one of the embodiments and examples described above include a negative electrode including an oxide of titanium; and a positive electrode including a nickel-cobalt-manganese composite oxide represented by a composition formula $Li_{i-a}Ni_xCO_yMn_zO_2$, subscripts x, y, and z satisfying an inequality $0.1 \leq x/(y + z) \leq 1.3$, subscript a satisfying $0 \leq a \leq 1$, and a ratio $A_S/A_{Ni}$ of an S atom abundance ratio $A_S$ to an Ni atom abundance ratio $A_{Ni}$ obtained by subjecting a surface of the positive electrode to a photoelectron spectroscopic measurement being 0.4 to 5. A ratio p/n of a capacity p of the positive electrode to a capacity n of the negative electrode is within a range of 1.2 to 2. Thereby, the nonaqueous electrolyte battery according to the first embodiment can exhibit a low average operating voltage and excellent cycling characteristics.

**Claims**

1. A nonaqueous electrolyte battery (100) comprising:

   a negative electrode (2) comprising an oxide of titanium;
   a positive electrode (3) comprising a nickel-cobalt-manganese composite oxide represented by a composition formula $Li_{1-a}Ni_xCo_yMn_zO_2$, subscripts x, y, and z satisfying an inequality $0.1 \leq x/(y + z) \leq 1.3$, subscript a satisfying $0 \leq a \leq 1$; and
   a nonaqueous electrolyte,
   wherein a ratio p/n of a capacity p of the positive electrode (3) to a capacity n of the negative electrode (2) is within a range of 1.2 to 2,
   **characterized in that** the positive electrode (3) has a surface state where a ratio $A_S/A_{Ni}$ of a S atom abundance ratio $A_S$ to a Ni atom abundance ratio $A_{Ni}$ obtained by subjecting a surface of the positive electrode (3) to a photoelectron spectroscopic measurement is 0.4 to 5.

2. The nonaqueous electrolyte battery (100) according to claim 1, wherein the positive electrode (3) further comprises a protective coating.

3. The nonaqueous electrolyte battery (100) according to claim 1, wherein the subscripts x, y, and z satisfy inequalities $0.3 \leq x/(y + z) \leq 1.3$ and $y \geq z$.

4. The nonaqueous electrolyte battery (100) according to claim 3, wherein the subscripts x, y, and z satisfy inequalities $0.6 \leq x/(y + z) \leq 1$ and $y \geq z$.

**5.** The nonaqueous electrolyte battery (100) according to claim 3, wherein the oxide of titanium is at least one selected from a group consisting of a lithium-titanium composite oxide having a spinel type structure, a lithium-titanium composite oxide having a ramsdellite type structure, monoclinic titanium dioxide, and a monoclinic niobium-titanium composite oxide.

**6.** The nonaqueous electrolyte battery (100) according to claim 3, further comprising:

a container (7) housing the negative electrode (2), the positive electrode (3), and the nonaqueous electrolyte, wherein the container (7) has a thickness being within a range of 0.2 to 5 mm, and the container (7) is a metal container comprising at least one metal selected from a group consisting of Fe, Ni, Cu, Sn, and Al.

**7.** The nonaqueous electrolyte battery (100) according to claim 3, further comprising a container (7) housing the negative electrode (2), the positive electrode (3), and the nonaqueous electrolyte, wherein the container (7) has a thickness being within a range of 0.1 to 2 mm, and the container (7) is a laminate film container comprising a metal layer comprising at least one metal selected from a group consisting of Fe, Ni, Cu, Sn, and Al, and resin layers sandwiching the metal layer.

**8.** A battery pack (20) comprising the nonaqueous electrolyte battery (21) according to claim 1.

**9.** The battery pack (20) according to claim 8, wherein the battery pack (20) comprises six of the nonaqueous electrolyte batteries (21) connected electrically in a series.

**10.** The battery pack (20) according to claim 8, wherein the battery pack (20) comprises a plurality of battery modules (23) each comprising six of the nonaqueous electrolyte batteries (21), and the plurality of battery modules (23) being connected electrically in a series, in parallel, or in a combination of a connection in a series and a connection in parallel.

**Patentansprüche**

**1.** Batterie mit nicht-wässrigem Elektrolyten (100), umfassend:

eine negative Elektrode (2), die ein Titanoxid umfasst;
eine positive Elektrode (3), die ein Nickel-Cobalt-Mangan-Verbundoxid mit einer Zusammensetzungsformel $Li_{1-a}Ni_xCo_yMn_zO_2$ umfasst, worin die Indices x, y und z eine Ungleichung $0,1 \leq x/(y + z) \leq 1,3$ erfüllen und Index a $0 \leq a \leq 1$ erfüllt; und
einen nicht-wässrigen Elektrolyten,
wobei ein Verhältnis p/n einer Kapazität p der positiven Elektrode (3) zu einer Kapazität n der negativen Elektrode (2) innerhalb eines Bereichs von 1,2 bis 2 liegt,
**dadurch gekennzeichnet, dass** die positive Elektrode (3) einen Oberflächenzustand aufweist, bei dem ein Verhältnis $A_S/A_{Ni}$ eines S Atomhäufigkeitsverhältnisses $A_S$ zu einem Ni Atomhäufigkeitsverhältnis $A_{Ni}$, erhalten durch photoelektronenspektroskopische Messung einer Oberfläche der positiven Elektrode (3), 0,4 bis 5 beträgt.

**2.** Batterie mit nicht-wässrigem Elektrolyten (100) gemäß Anspruch 1, wobei die positive Elektrode (3) ferner eine Schutzschicht aufweist.

**3.** Batterie mit nicht-wässrigem Elektrolyten (100) gemäß Anspruch 1, wobei die Indices x, y und z die Ungleichungen $0,3 \leq x/(y + z) \leq 1,3$ und $y \geq z$ erfüllen.

**4.** Batterie mit nicht-wässrigem Elektrolyten (100) gemäß Anspruch 3, wobei die Indices x, y und z die Ungleichungen $0,6 \leq x/(y + z) \leq 1$ und $y \geq z$ erfüllen.

**5.** Batterie mit nicht-wässrigem Elektrolyten (100) gemäß Anspruch 3, wobei das Titanoxid mindestens eines, ausgewählt aus der Gruppe bestehend aus einem Lithium-Titan-Verbundoxid mit einer Spinell-artigen Struktur, einem Lithium-Titan-Verbundoxid mit einer Ramsdellit-artigen Struktur, monoklinem Titandioxid und einem monoklinen Niob-Titan-Verbundoxid, ist.

**6.** Batterie mit nicht-wässrigem Elektrolyten (100) gemäß Anspruch 3, ferner umfassend:

einen Behälter (7), der die negative Elektrode (2), die positive Elektrode (3) und den nicht-wässrigen Elektrolyten beherbergt,
wobei der Behälter (7) eine Dicke aufweist, die in einem Bereich von 0,2 bis 5 mm liegt und der Behälter (7) ein Metallbehälter ist, der mindestens ein Metall, ausgewählt aus der Gruppe bestehend aus Fe, Ni, Cu, Sn und Al, umfasst.

**7.** Batterie mit nicht-wässrigem Elektrolyten (100) gemäß Anspruch 3, die ferner einen Behälter (7), der die negative Elektrode (2), die positive Elektrode (3) und den nicht-wässrigen Elektrolyten beherbergt, umfasst,
wobei der Behälter (7) eine Dicke aufweist, die in einem Bereich von 0,1 bis 2 mm liegt und der Behälter (7) ein Laminatfilmbehälter ist, der eine Metallschicht umfasst, die mindestens ein Metall, ausgewählt aus der Gruppe bestehend aus Fe, Ni, Cu, Sn und Al, und Harzschichten, die die Metallschicht einklemmen, umfasst.

**8.** Batteriepack (20), das die Batterie mit nicht-wässrigem Elektrolyten (21) gemäß Anspruch 1 umfasst.

**9.** Batteriepack (20) gemäß Anspruch 8, wobei das Batteriepack (20) sechs der Batterien mit nicht-wässrigem Elektrolyten (21), elektrisch in Reihe geschaltet, umfasst.

**10.** Batteriepack (20) gemäß Anspruch 8, wobei das Batteriepack (20) mehrere Batteriemodule (23) umfasst, die jeweils sechs der Batterien mit nicht-wässrigem Elektrolyten (21) umfassen, und die mehreren Batteriemodule (23) elektrisch in Reihe, parallel oder in einer Kombination aus Reihen- und Parallelschaltung geschaltet sind.

## Revendications

**1.** Batterie à électrolyte non aqueux (100) comprenant :

une électrode négative (2) comprenant un oxyde de titane ;
une électrode positive (3) comprenant un oxyde composite de nickel-cobalt-manganèse représenté par une formule de composition $Li_{1-a}Ni_xCo_yMn_zO_2$, les indices x, y et z satisfaisant une inégalité $0,1 \leq x / (y + z) \leq 1,3$, l'indice a satisfaisant $0 \leq a \leq 1$; et
un électrolyte non aqueux,
dans lequel un rapport p/n d'une capacité p de l'électrode positive (3) par rapport à une capacité n de l'électrode négative (2) se situe dans la plage de 1,2 à 2,
**caractérisée en ce que** l'électrode positive (3) a un état de surface où un rapport $A_S/A_{Ni}$ d'un rapport $A_S$ d'abondance d'atomes de S par rapport à un rapport $A_{Ni}$ d'abondance d'atomes de Ni obtenu en soumettant une surface de l'électrode positive (3) à une mesure spectroscopique photoélectronique est de 0,4 à 5.

**2.** Batterie à électrolyte non aqueux (100) selon la revendication 1, dans laquelle l'électrode positive (3) comprend en outre un revêtement protecteur.

**3.** Batterie à électrolyte non aqueux (100) selon la revendication 1, dans laquelle les indices x, y et z satisfont les inégalités $0,3 \leq x / (y + z) \leq 1,3$ et $y \geq z$.

**4.** Batterie à électrolyte non aqueux (100) selon la revendication 3, dans laquelle les indices x, y et z satisfont les inégalités $0,6 \leq x / (y + z) \leq 1$ et $y \geq z$.

**5.** Batterie à électrolyte non aqueux (100) selon la revendication 3, dans laquelle l'oxyde de titane est au moins un élément sélectionné à partir du groupe constitué par un oxyde composite de lithium et de titane ayant une structure de type spinelle, un oxyde composite de lithium et de titane ayant une structure de type ramsdellite, un dioxyde de titane monoclinique et un oxyde composite de niobium et de titane monoclinique.

**6.** Batterie à électrolyte non aqueux (100) selon la revendication 3, comprenant en outre :

un conteneur (7) contenant l'électrode négative (2), l'électrode positive (3) et l'électrolyte non aqueux,
dans laquelle le conteneur (7) a une épaisseur comprise entre 0,2 et 5 mm et le conteneur (7) est un conteneur en métal comprenant au moins un métal sélectionné à partir d'un groupe constitué par Fe, Ni, Cu, Sn et Al.

**7.** Batterie à électrolyte non aqueux (100) selon la revendication 3, comprenant en outre un conteneur (7) logeant l'électrode négative (2), l'électrode positive (3) et l'électrolyte non aqueux,
dans laquelle le conteneur (7) a une épaisseur comprise entre 0,1 et 2 mm et le conteneur (7) est un conteneur en film stratifié comprenant une couche métallique comprenant au moins un métal sélectionné à partir d'un groupe constitué par Fe, Ni, Cu , Sn et Al, et des couches de résine prenant en sandwich la couche de métal.

8. Bloc-batterie (20) comprenant la batterie à électrolyte non aqueux (21) selon la revendication 1.

9. Bloc-batterie (20) selon la revendication 8, dans lequel le bloc-batterie (20) comprend six des batteries à électrolyte non aqueux (21) connectées électriquement en série.

10. Bloc-batterie (20) selon la revendication 8, dans lequel le bloc-batterie (20) comprend une pluralité de modules de batterie (23), chacun comprenant six des batteries à électrolyte non aqueux (21), et la pluralité de modules de batterie (23) étant connectée électriquement en série, en parallèle ou en une combinaison d'une connexion en série et d'une connexion en parallèle.

F I G. 1

F I G. 2

FIG. 3

F I G. 4

F I G. 5

F I G. 6

F I G. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005221170 A1
- US 2011256437 A1
- JP 2008270086 A